# EUROPEAN PATENT APPLICATION

(11) **EP 4 597 992 A1**
(43) Date of publication of application: **06.08.2025**
(21) Application number: 23886087.8
(22) Date of filing: 19.10.2023
(51) Int. Cl.: H04L 69/24, H04L 65/1069, H04L 65/40, G06Q 50/10, G06Q 50/50, G06T 13/40, G06T 7/20, G06T 15/00, H04W 4/16, H04W 88/02

(54) **METHOD AND DEVICE FOR PERFORMING MEDIA CALL SERVICE**

(30) Priority: 03.11.2022 KR 20220145308
(71) Applicant: Samsung Electronics Co., Ltd., Suwon-si, Gyeonggi-do 16677 (KR)
(72) Inventor: BAE, Jaehyeon, Suwon-si Gyeonggi-do 16677 (KR); LEE, Jicheol, Suwon-si Gyeonggi-do 16677 (KR)
(74) Representative: Nederlandsch Octrooibureau
(86) International application number: PCT/KR2023/016253
(87) International publication number: WO 2024/096390

(57) **Abstract**

The present disclosure relates to a 5G or 6G communication system for supporting a higher data transmission rate. The present disclosure provides a method of a calling terminal, comprising the operations of: transmitting, to a called terminal, a first SDP offer message including information for indicating a content type of at least one avatar and information, related to the movement of the at least one avatar, about whether the calling terminal is supported; receiving, from the called terminal, as a response to the first SDP offer message, a SDP response message including information, related to the movement of the at least one avatar, about whether the called terminal is supported; generating movement information about the at least one avatar on the basis of information, included in the SDP response message, about whether the called terminal is supported; and using the generated movement information so as to perform an avatar call service with a called terminal.

## Description

### [Technical Field]

The disclosure relates to an audio or video media call service and, more particularly, to a method and a device for processing an avatar call service.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources. Following the pursuit of high-resolution (standard-definition (SD), high-definition (HD), and ultra-high-definition (URD)) video multimedia, the next immersive multimedia experience is a 360-degree video and 3D volumetric content.

A user may produce a 3D data (3D asset) file in the form of a 3D object from images captured by multiple cameras by utilizing 3D volumetric content, and thus the user may combine a real environment and a virtual 3D object in AR and metaverse environments to position the object in a location desired by the user and to view a stereoscopic video in any desired direction.

Although 3D volumetric content still uses a conventional 2D video codec or binary compression method for compression, supporting 3D volumetric content requires new technologies in an end-to-end workflow. The technologies may include a scene description technology for forming a scene and defining components, a new format that supports connection and compression of 3D object geometry information and texture information forming a 3D object and components of the 3D object, a new format that includes connection and expression information with 3D object data for expressing and supporting a movement (animation) of a 3D object, a media processing technology for reducing format redundancy, and a mechanism for increasing the efficiency of a new delivery protocol and content delivery.

There has been much work and research on 3D volumetric content in relation to metaverse and AR recently, whereas an interactive service for 3D volumetric content (e.g. a 3D avatar) has not yet been considered in detail. As existing 5G infrastructure for an interactive multimedia service using an IP multimedia subsystem (IMS) is used, an additional parameter and procedure for each new form of media and use cases may be required to support various forms of multimedia.

### [Detailed Description of the Invention]

### [Technical Problem]

The disclosure provides a method and a device for providing an interactive service using data of avatar media (e.g., a 3D avatar).

### [Technical Solution]

The disclosure provides a method in which an originating terminal performs a media call service in a wireless communication network, the method including: transmitting a first session description protocol (SDP) offer message including information indicating a content type of at least one avatar and information about whether the originating terminal supports a movement of the at least one avatar to a terminating terminal; receiving an SDP response message including information about whether the terminating terminal supports the movement of the at least one avatar from the terminating terminal in response to the first SDP offer message; generating movement information about the at least one avatar, based on the information about whether the terminating terminal supports the movement of the at least one avatar included in the SDP response message; and performing an avatar call service with the terminating terminal by using the generated movement information.

The disclosure provides a method in which a terminating terminal performs a media call service in a wireless communication network, the method including: receiving a first session description protocol (SDP) offer message including information indicating a content type of at least one avatar and information about whether an originating terminal supports a movement of the at least one avatar to from the originating terminal; transmitting an SDP response message including information about whether the terminating terminal supports the movement of the at least one avatar to the originating terminal in response to the first SDP offer message; generating movement information about the at least one avatar, based on the information about whether the terminating terminal supports the movement of the at least one avatar included in the SDP response message; and performing an avatar call service with the originating terminal by using the generated movement information.

The disclosure provides an originating terminal for performing a media call service in a wireless communication network, the originating terminal including: a transceiver; and a processor configured to, by controlling the transceiver, transmit a first session description protocol (SDP) offer message including information indicating a content type of at least one avatar and information about whether the originating terminal supports a movement of the at least one avatar to a terminating terminal, receive an SDP response message including information about whether the terminating terminal supports the movement of the at least one avatar from the terminating terminal in response to the first SDP offer message, generate movement information about the at least one avatar, based on the information about whether the terminating terminal supports the movement of the at least one avatar included in the SDP response message, and perform an avatar call service with the terminating terminal by using the generated movement information.

The disclosure provides a terminating terminal for performing a media call service in a wireless communication network, the terminating terminal including: a transceiver; and a processor configured to, by controlling the transceiver, receive a first SDP offer message including information indicating a content type of at least one avatar and information about whether an originating terminal supports a movement of the at least one avatar to from the originating terminal, transmit an SDP response message including information about whether the terminating terminal supports the movement of the at least one avatar to the originating terminal in response to the first SDP offer message, generate movement information about the at least one avatar, based on the information about whether the terminating terminal supports the movement of the at least one avatar included in the SDP response message, and perform an avatar call service with the originating terminal by using the generated movement information.

A method of a transmitting device according to an aspect of the disclosure may include: transmitting a session description protocol (SDP) offer message for a negotiation for a parameter associated with avatar data and related movement information to a receiving device; and receiving an SDP answer message including avatar data and related movement data-related information provided by a receiving terminal, which is generated based on the avatar data and the related movement information included in the SDP offer message and provided by a transmitting terminal from the receiving device.

A method of a receiving device according to another aspect of the disclosure may include: receiving a session description protocol (SDP) offer message for a negotiation for a parameter associated with avatar data and related movement information from a transmitting device; generating an SDP answer message including avatar data and related movement data-related information of a receiving terminal, based on the avatar data and the related movement data-related information included in the SDP offer message and provided by a transmitting terminal; and transmitting the SDP answer message to the transmitting device.

A transmitting device according to still another aspect of the disclosure may include a transceiver and a controller, wherein the controller may be configured to: transmit a session description protocol (SDP) offer message for a negotiation for a parameter associated with avatar data and related movement information to a receiving device; and receive an SDP answer message including avatar data and related movement data-related information of the receiving device, generated based on the avatar data and the related movement data-related information included in the SDP offer message and from the receiving device.

A receiving device according to yet another aspect of the disclosure may include a transceiver and a controller, wherein the controller may be configured to: receive a session description protocol (SDP) offer message for a negotiation for a parameter associated with avatar data and related movement information from a transmitting device; generate an SDP answer message including avatar data and related movement data-related information of the receiving device, based on the avatar data and the related movement data-related information of the transmitting device included in the SDP offer message; and transmit the SDP answer message to the transmitting device.

### [Advantageous Effects]

According to embodiments of the disclosure, for an interactive service using avatar media (e.g., a 3D avatar), avatar data and movement variance information about a corresponding avatar object provided by each terminal may be provided, making it possible to use the service.

### [Brief Description of Drawings]

FIG. 1A illustrates the architecture of a third-generation (3G) network;
FIG. 1B illustrates the architecture of a Long-Term Evolution (LTE) network;
FIG. 2A illustrates the structure of a voice and video codec and a real-time transport protocol (RTP)/user datagram protocol (UDP)/internet protocol (IP) of a voice over LTE (VoLTE)-supporting UE according to an embodiment of the disclosure;
FIG. 2B illustrates a codec mode request (CMR) message according to an embodiment of the disclosure;
FIG. 3 illustrates the structure of a temporary maximum media bit-rate request (TMMBR) message transmitted through an RTCP according to an embodiment of the disclosure;
FIG. 4 illustrates the architecture of a fifth-generation (5G) network for transmitting avatar content and related movement information according to an embodiment of the disclosure;
FIG. 5 illustrates the protocol architecture of a 5G network for transmitting avatar content and related movement information according to an embodiment of the disclosure;
FIG. 6 illustrates a procedure in which a transmitting UE (UE A) and a receiving UE (UE B) negotiate for a parameter and guarantee quality of service (QoS) of a wired or wireless transmission path in an avatar content transmission method using an IP multimedia subsystem according to an embodiment of the disclosure;
FIG. 7 illustrates a procedure in which a transmitting UE (UE A) and a receiving UE (UE B) negotiate for avatar content and related movement information by using an IP multimedia subsystem and transmit the avatar content and related movement information through different types of protocol when initiating a service according to an embodiment of the disclosure;
FIG. 8 illustrates a procedure in which a transmitting UE (UE A) and a receiving UE (UE B) negotiate for a parameter and related movement information and a codec and a parameter for an additional video call and switch to an avatar call while using a service using a 2D video call when preparing for avatar call setup including avatar data transmission in an avatar content transmission method using an IP multimedia subsystem according to an embodiment of the disclosure;
FIG. 9 illustrates an example of an SDP offer according to an embodiment of the disclosure;
FIG. 10 illustrates an example of an SDP offer according to an embodiment of the disclosure;
FIG. 11 illustrates a method in which an originating UE performs a media call according to the disclosure;
FIG. 12 illustrates a method in which a terminating UE performs a media call according to the disclosure;
FIG. 13 illustrates the configuration of a UE device according to the disclosure; and
FIG. 14 illustrates the device configuration of an IMS entity according to the disclosure.

### [Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data procesisng apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, according to some embodiments, the "unit" may include one or more processors.

As used herein, the term "terminal" or "device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various example of the terminal may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and reproduction home appliance having a wireless communication function, an Internet home appliance capable of wireless Internet access and browsing, and portable units or terminals having integrated combinations of the above functions. Furthermore, the terminal may include a machine to machine (M2M) terminal, and a machine type communication (MTC) terminal/device, but is not limited thereto. the specification, the terminal may also be referred to as an electronic device or simply as a device.

The terms which will be described below are terms defined in consideration of the functions in the disclosure, and may be different according to users, intentions of the users, or customs. Therefore, the definitions of the terms should be made based on the contents throughout the specification.

The disclosure relates to capturing, processing, pre-processing, and post-processing of multimedia content, delivery of metadata, delivery of a 3D avatar (face, full body, and half body) including geometry information and related texture information about a 3D object, and decoding and rendering of 3D object content. In the disclosure, 3D avatar content may refer to a 3D asset file in a mesh form including the geometry and texture of a 3D object or a 3D asset file in a point cloud compression (PCC) form including a 3D projection image and geometry information about a 3D object.

3D content may be consumed using head-mounted devices (HMDs) and augmented reality (AR). However, due to characteristics of the content, a user is unable to view the entire 360-degree 3D content at a time, and may view only a portion thereof considering a view direction shown through the viewpoint of the user referred to as an arbitrary camera in a virtual space. Thus, the entire 3D object requires very high resolution in order to provide content considering a sufficiently high-quality view direction at an arbitrary location.

Due to the high resolution requirement of 3D object content, there are a large number of technologies for attempting to save a bandwidth (BW) for delivery. Since a large number of bandwidths are required to transmit the entire 3D object to multiple high-quality cameras, a 3D content transmission device may receive input from multiple camera to express one object or a plurality of objects in a space. Further, the 3D content transmission device may generate a 3D object from the input, based on multi-camera information, may transform each 3D object into a mesh or PCC form in order to compress the 3D object by a method easy for transmission, and may express the relationship between 3D objects in a single scene description. For example, the 3D content transmission device may subject an object in a mesh form to image/video compression to have an appropriate parameter (geometry point and texture resolution) in view of a bandwidth and the rendering performance (display resolution and memory) of a UE to generate content. For an object in a PCC form, the3D content transmission device may generate 3D object content reflecting requirements of a network and transmitting/receiving UEs by adjusting the number of points for expressing the object.

An interactive service requires very low latency to support two-way communication, and has an additional requirement when used for transmission of a high-quality 3D object mentioned above. In the disclosure, when capturing 3D object content, high-quality 3D object content may be generated, and only variance in the movement of a corresponding object may be transmitted to output the movement of the 3D object when using an interactive service.

This disclosure introduces a delivery technique for 3D object content and related movement variance information for an interactive 3D avatar object. By defining a new parameter for session description protocol (SDP) signaling, a receiver may request content of a 3D avatar object required for rendering the current viewport of a viewer. Since transmission and reception of a 3D object is performed once in each UE upon initial connection and only variance in the movement of the object is transmitted subsequently, both processing power and a bandwidth may be saved.

In the disclosure, an originating UE enables interactive 3D avatar delivery without needing to continuously transmit a 3D avatar object thereof to a receiver. A bandwidth may be saved by delivering only information about variance in the movement of the 3D avatar object required by a receiving UE. The originating UE may transmit a 2D image/video (if needed), thus enabling the receiving UE to calculate actual variance in the received 3D avatar object. Accordingly, the variance in the movement of the 3D avatar object of the originating UE may be rendered in the receiving UE.

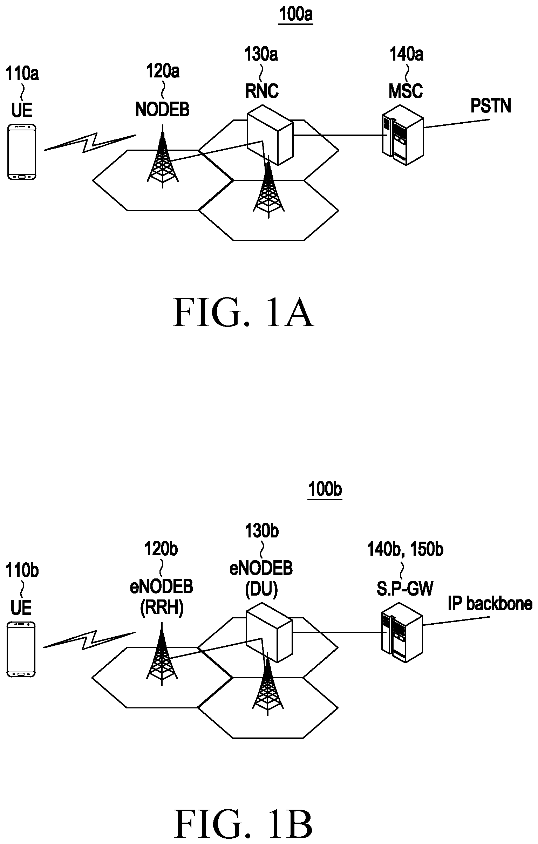

FIG. 1A illustrates the architecture of a 3G network.

In FIG. 1A, the 3G network 100a includes a user equipment (UE) 110a, a NodeB 120a, a radio network controller (RNC) 130a, and a mobile switching center (MSC) 140a. The 3G network 100a is connected to another mobile communication network and a public switched telephone network (PSTN). In the 3G network 100a, a voice is compressed or restored using an adaptive multi-rate (AMR) codec, and the AMR codec is installed in the UE 110a and the MSC 140a to provide a two-way call service. The MSC 140a converts a voice compressed with the AMR codec into a pulse code modulation (PCM) format and transmits the voice to the PSTN, or vice versa. That is, the MSC 140a receives a voice in the PCM format from the PSTN, compresses the voice with the AMR codec, and transmits the voice to the NodeB 120a. The RNC 130a may control the call bit rate of a voice codec installed in the UE 110a and the MSC 140a in real time by using a codec mode control (CMC) message.

However, with the introduction of a packet-switched network in 4G (LTE), the voice codec is installed only in a UE, and a voice frame compressed at an interval of 20 ms in an originating UE is transmitted to a counterpart UE without being restored in a base station or a network node located in the middle of a transmission path.

FIG. 1B illustrates the architecture of an LTE network.

In FIG. 1B, the LTE (4G) network 100b may include at least one of a UE 110b, eNodeBs 120b and 130b, and a serving gateway (S-GW)/packet data network gateway (P-GW) 140b and 150b.

In FIG. 1B, a voice codec is installed only in the UE 110b, and each UE 110b may adjust the voice bit rate of a counterpart terminal by using a codec mode request (CMR) message.

In FIG. 1B, the eNodeBs 120b and 130b, which are base stations, may be divided into a remote radio head (RRH) 120b dedicated to an RF function and a digital unit (DU) 130b dedicated to processing a modem digital signal. The eNodeBs 120b and 130b may be connected to an IP backbone network via the S-GW 140b and the P-GW 150b. The IP backbone network is connected to a mobile communication network of another service provider or the Internet.

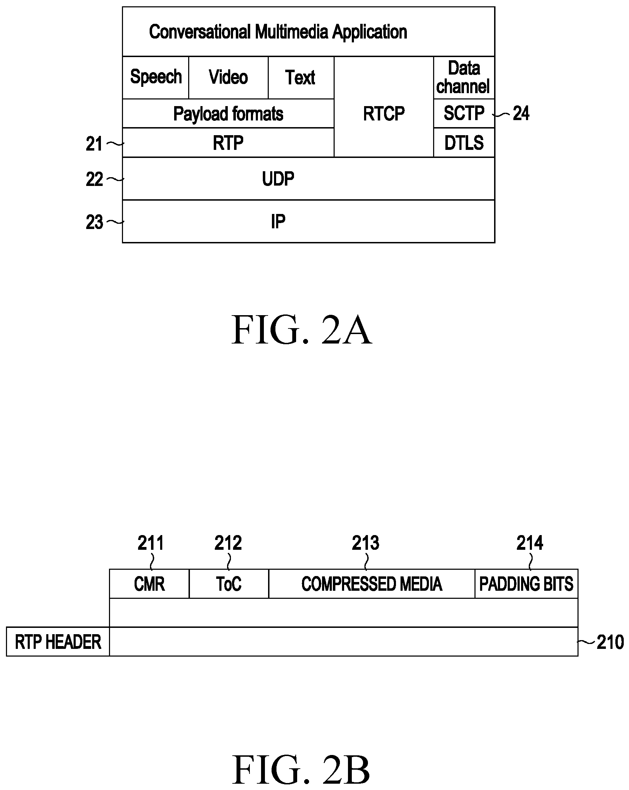

FIG. 2A illustrates the structure of a voice and video codec and an RTP/UDP/IP of a VoLTE-supporting UE and a stream control transmission protocol (SCTP)/UDP/IP for transmitting media-related additional information according to an embodiment of the disclosure.

Referring to FIG. 2A, the IP protocol 23 located at the bottom of the structure is connected to a packet data convergence protocol (PDCP) located at the top of the protocol structure. In FIG. 2A, media data (e.g., a speech, a video, and text) may be transmitted through the RTP 21/UDP 22/IP protocol 23, and additional information related to media may be transmitted through the SCTP 24/UDP 22/IP protocol 23. An RTP/UDP/IP header may be attached to a compressed media frame (media data) of the voice and video codec, and an STCP/UDP/IP header may be attached to the additional information related to the media, thus being transmitted to a counterpart UE through an LTE network. The counterpart UE may receive a compressed media packet (media data) transmitted from the network, may restore the media, may listen to the media through a speaker, may display the media, and may view the media. Here, even though the compressed voice packet and video packet do not arrive at the same time, timestamp information of the RTP protocol header may be used to synchronize the two media (voice and video).

FIG. 2B illustrates a CMR message.

In FIG. 2B, the CMR message may be a CMR message used to adjust a bit rate at which a counterpart UE compresses a voice according to a change in the transmission status during a call.

Referring to FIG. 2B, an upper part of FIG. 2B corresponds to a payload format 210, and may include a CMR field 211, a table of contents (ToC) field 212, a compressed media field 213 including compressed media data, and/or a padding bit field 214 including padding bits.

In FIG. 2B, the 4-bit CMR field 211 may be added to a compressed voice frame (media data) in a voice codec indicated by a speech to display a bit rate requested to be used by the voice codec of the counterpart UE, and the 4-bit ToC field 212 may be added to indicate the bit rate and type of the compressed and transmitted frame (media data). VoLTE may support a voice codec, such as Adaptive Multi-Rate (AMR), Adaptive Multi-Rate Wideband (AMR-WB), and Enhanced Voice Services (EVS).

The CMR message may be transmitted via an RTP control protocol (RTCP) in addition to a payload protocol.

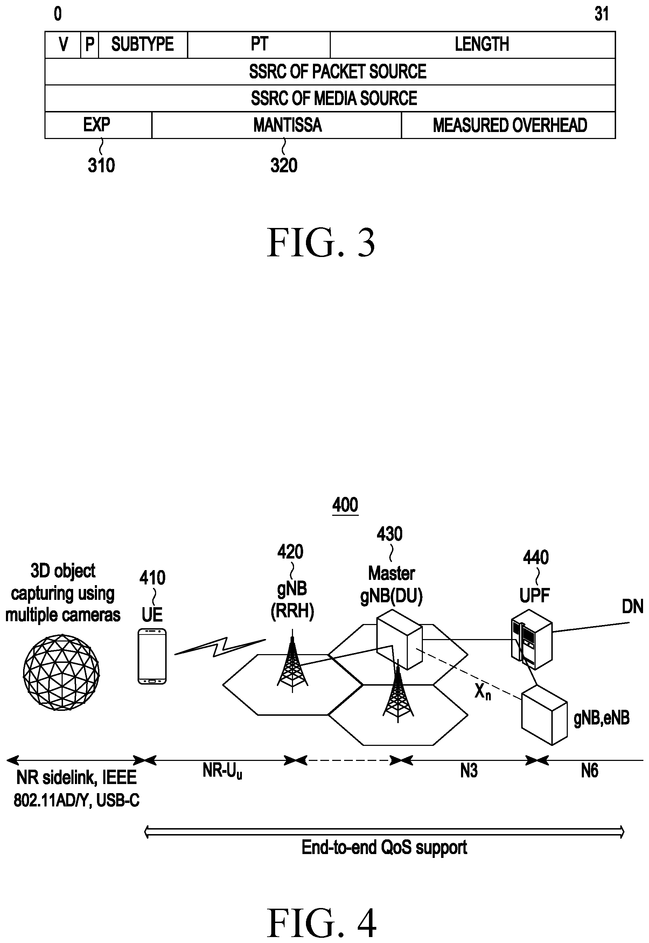

FIG. 3 illustrates the structure of a TMMBR message transmitted via an RTCP according to an embodiment of the disclosure.

Referring to FIG. 3, the TMMBR message may be included in the RTCP to dynamically adjust the bit rate of an image codec installed in a counterpart UE during a call. In an embodiment, the TMMBR message may include an Exp field 310 indicating an Exp value and a mantissa field 320 indicating a mantissa value. A UE receiving the TMMBR message may maintain the bit rate of a compressed image to be "Mantissa X 2Exp" bps or less, based on the Exp field 310 and the mantissa field 320. The value of "Mantissa X2Exp" may be configured to be equal to or less than a bit rate negotiated before starting a video call.

FIG. 4 illustrates the architecture of a 5G network for transmitting avatar data and related movement information according to an embodiment of the disclosure.

In FIG. 4, 3D avatar data may be captured and generated by multiple cameras configured as a spherical ball rig. 3D avatar-related movement information may be generated based on variance in movement in a depth camera (a type of camera capable of calculating the depth of a pixel to express a 3D image) based on an infrared camera mounted on a UE 410 or a general image.

Referring to FIG. 4, a 5G network 400 may include at least one of the UE 410, gNodeBs (gNBs) 420 and 430, and a user plane function (UPF) 440. In an embodiment, the UE 410 may be connected to a 360-degree camera.

5G nodes corresponding to an eNodeB, an S-GW, and a P-GW of LTE are the gNB 410, the UPF 440, and a data network (DN). The 3D avatar data may be transmitted between UEs via an LTE or 5G sidelink using an unlicensed frequency band or Wi-Fi Direct without passing through a base station (e.g., the gNB) or be transmitted directly between UEs via a USB-C cable. When the USB-C cable is used, a large amount of data may be transmitted at a low rate without errors, and a video may be compressed in the UE instead of the camera.

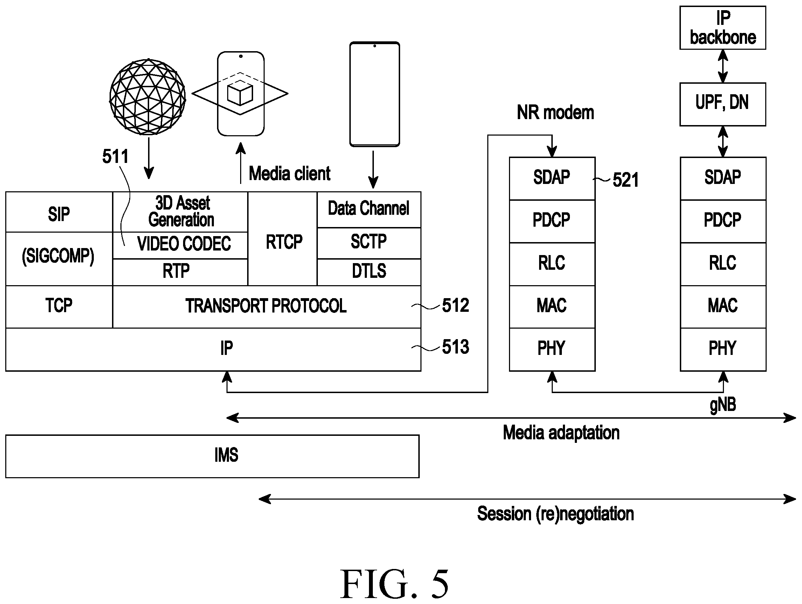

FIG. 5 illustrates the protocol architecture of a 5G network for transmitting avatar data and related movement information according to an embodiment of the disclosure.

Images captured from multiple cameras are reconstructed into various 3D asset data forms (such as a mesh and a PCC) according to a requirement negotiated between a transmitter (transmitting UE) and a receiver (receiving UE). When the form of a generated 3D object is a PCC, a projection image generated in the form of a patch may compressed using a video codec 511 (such as advanced video coding (AVC) or high-efficiency video coding (HEVC)), or when the form of the generated 3D object is a mesh, geometry information about the 3D object may be stored in a binary form and compressed using a binary compression codec (such as Draco) and a texture image may be compressed using the video codec 511 (such as AVC or HEVC). Animation information related to the 3D object (e.g., variance in facial feature points when the 3D object is a human face) may be stored in a binary form and transmitted together with 3D data or transmitted using a separate data channel. Subsequently, the generated 3D asset data may be delivered using various transport protocols 512, such as an RTP and an internet protocol 513, including the address of the receiving UE, transmitted to a 5G New Radio (NR) modem, and transmitted to the receiving UE via an uplink. Unlike the protocol architecture of an LTE modem, the NR modem has a new protocol called a service data adaptation protocol (SDAP) 521 located above a PDCP.

The receiving UE may obtain a payload by removing a header of each protocol from a received protocol data unit (PDU), and may recover the payload into the form of compressed 3D data (3D asset) fed into a 3D object renderer. The recovered 3D data may be three-dimensionally modeled (if necessary), and the data may be disposed in a 3D form in a virtual space. A view matching a current viewport of a user may be rendered on a display connected to the receiving UE. The current viewport of the user may vary depending on an application and a service provider. For example, in a case of a 3D avatar call, it may be assumed that the user views a 3D avatar from the front at a specific spatial position according to the viewpoint of the user. A method of configuring the specific spatial position may be actually measuring the specific spatial position by considering the distance between the user and the display, the size of a space, or the size of the 3D avatar or adjusting and configuring the specific spatial position to a certain size according to the resolution of the display, thereby displaying 3D content to the user, based on a configured value.

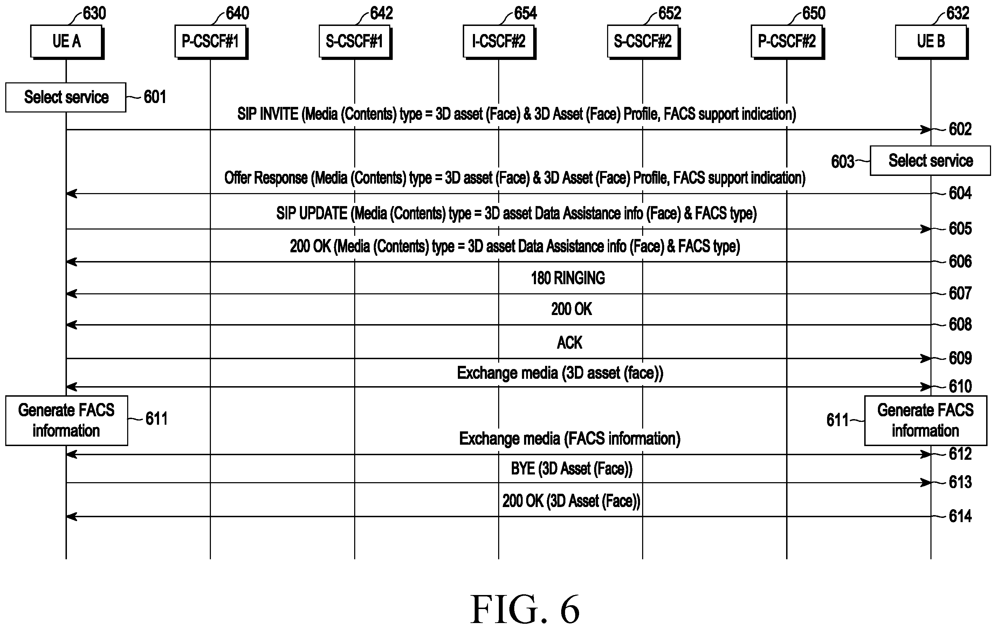

FIG. 6 illustrates a procedure in which a transmitting UE (UE A) and a receiving UE (UE B) negotiate for a parameter and guarantee QoS of a wired or wireless transmission path in a transmission method for performing an avatar video call using an IP multimedia subsystem (IMS) according to an embodiment of the disclosure.

In FIG. 6, the transmitting UE (UE A) 630 and the receiving UE (UE B) 632 may negotiate a parameter for a 3D avatar data type and related information (e.g., a 3D avatar type (face, half body, or full body) and avatar-related texture resolution) and animation-related information (e.g., variance (coefficient) in the movement of a feature point) about a corresponding 3D avatar by using an SDP message (SDP offer message 602/SDP answer message 604). That is, SDP-based negotiation may be performed between the transmitting UE (UE A) and the receiving UE (UE B) to negotiate a parameter(s) for 3D avatar data.

In operation 601, the transmitting UE (UE A) 630 may select a video call using a 3D avatar as a service when connecting an interactive service with the receiving UE (UE B) 632 according to a user's selection or a predefined configuration.

In operation 602, the transmitting UE 630 may determine at least one of a codec(s) and a 3D avatar-related parameter(s) and insert the selected one into a payload of an SDP message. The inserted codec(s) or 3D avatar-related parameter(s) may reflect the UE performance of the transmitting UE 630 and user preference (such as the user's selection in operation 601) for a supportable session. The transmitting UE 630 may generate the SDP message (e.g., an SDP offer) including a bandwidth requirement and each characteristic, and may assign a local port number for each possible media flow.

Multiple media flows may be provided for the interactive service, and a selection of multiple codices or multiple avatar-related parameters (e.g., 3D avatar-related parameters) may be provided for each media flow (m = line in SDP). The avatar-related parameters may include at least one of 3D data-related information (e.g., Media (Contents) type = 3gpp_3DAsset_Face) and information for determining whether a movement is supported (e.g., a facial action coding system (FACS) support indication). The transmitting UE 630 may transmit a session initiation protocol (SIP) invite message including the SDP payload to the receiving UE 632. Hereinafter, operations of IMS entities involved in transmitting and receiving a message between the transmitting UE and the receiving UE will be described, which are only for better understanding of a communication environment of the disclosure, and the transmitting UE and the receiving UE may be considered to directly communicate with each other.

The transmitting UE 630 may transmit the SIP invite message to a proxy call session control function (P-CSCF) (e.g., P-CSCF#1 640) assigned to the transmitting UE 630.

P-CSCF#1 640 may examine a media parameter (component). When identifying that use of the media parameter is not allowed in an IMS session, based on a P-CSCF local policy or (if available) bandwidth authorization limitation information from a policy and charging rules function (PCRF) or a policy control function (PCF), P-CSCF#1 640 may reject a session initiation attempt (i.e., the SIP invite message). The rejection may include sufficient information about the originating UE (e.g., UE A 630) to re-attempt session initiation using a media parameter allowed by a network local policy of P-CSCF#1 640 according to procedures specified in IETF RFC 3261 [12].

In FIG. 6, P-CSCF#1 640 may allow the initial session initiation attempt to continue. In this operation, whether the P-CSCF needs to interact with the PCRF/PCF is based on an operator policy. P-CSCF#1 640 may forward the invite message to session call session control function (S-CSCF)#1 642. S-CSCF#1 642 may examine the media parameter (component).

When identifying that use of the media parameter is not allowed in the IMS session, based on a local policy or a subscriber profile of an originating user, S-CSCF#1 642 may reject the session initiation attempt. This rejection may include the sufficient information about the originating UE to re-attempt session initiation using a media parameter allowed by a network local policy of S-CSCF#1 642 and the subscriber profile of the originating user according to procedures specified in IETF RFC 3261 [12].

In FIG. 6, S-CSCF#1 642 may allow the initial session initiation attempt to continue. S-CSCF#1 642 may forward the invite message to S-CSCF#2 652 via interrogating call session control function (I-CSCF)#2 654 through an S-S session flow procedure.

S-CSCF#2 652 may examine the media parameter (component). When identifying that use of the media parameter is not allowed in the IMS session, based on a local policy or a subscriber profile of a terminating user (e.g., UE B 632), S-CSCF#2 652 may reject the session initiation attempt. This rejection may include sufficient information about the terminating UE to re-attempt session initiation using a media parameter allowed by a network local policy of S-CSCF#2 652 and the subscriber profile of the originating user according to procedures specified in IETF RFC 3261 [12].

In FIG. 6, S-CSCF#2 652 may allow the initial session initiation attempt to continue. S-CSCF#2 652 may forward the invite message to P-CSCF#2 650. P-CSCF#2 650 may examine the media parameter (component). When identifying that use of the media parameter is not allowed in the IMS session (based on the P-CSCF local policy or (if available) the bandwidth authorization limitation information from the PCRF or the PCF), P-CSCF#2 650 may reject the session initiation attempt. This rejection may include the sufficient information about the originating UE to re-attempt session initiation using a media parameter allowed by a network local policy of P-CSCF#2 650 according to procedures specified in IETF RFC 3261 [12].

In FIG. 6, P-CSCF#2 650 may allow the initial session initiation attempt to continue. In this operation, whether the P-CSCF needs to interact with the PCRF/PCF is based on an operator policy. P-CSCF#2 650 may forward the invite message to UE B 632.

Through the foregoing process, SDP payload information including the avatar-related parameter transmitted from UE A 630 to P-CSCF#1 640 may be included in the SIP invite message and transmitted to an IMS entity (e.g., S-CSCF#2 and P-CSCF#2) connected to the counterpart UE (UE B) 632 through nodes, such as S-CSCF#1 642 and I-CSCF#2 654, and be transmitted to the receiving UE (UE B) 632.

In operation 603, as in the operation of the transmitting UE (UE A) 630 in operation 601, the receiving UE (UE B) 632 may select a video call using a 3D avatar when accepting connection of the interactive service according to a user preference or a predefined configuration. The receiving UE (UE B) 632 may determine a complete set of codices or avatar-related parameters supportable for the session. UE B 632 may determine an intersection with the codices and the avatar-related parameters in the SDP (SDP offer) in the invite message, or may select an avatar-related parameter supportable by the transmitting UE and then determine an avatar-related parameter supportable by the receiving UE and related information to transmit the same to the transmitting UE.

The receiving UE (UE B) may select avatar-related 3D data information supported by the receiving UE and information about whether a movement is supported, based on the 3D avatar-related 3D data information (desired 3D media (content) type) and the information about the movement is supported for the avatar (FACS support indication) according to the information provided by the transmitting UE (UE A) in operation 602. For each unsupported media flow, the receiving UE (UE B) may insert an SDP entry for media (m = line) with port = 0. For each supported media flow, the receiving UE (UE B) may insert an SDP entry having the same codec or avatar-related parameters and assigned port as those in the SDP from the transmitting UE (UE A).

In operation 604, UE B 632 may transmit an SDP (SDP response/answer) including at least one of information listing a common media flow and codec, an avatar-related parameter, and information about whether an avatar movement is supported (FACS support indication) to UE A 630. Hereinafter, operations of IMS entities (e.g., the P-CSCF, the S-CSCF, and the I-CSCF) involved in transmitting and receiving a message between the transmitting UE and the receiving UE will be described, which are only for better understanding of a communication environment of the disclosure, and the transmitting UE and the receiving UE may be considered to directly communicate with each other.

UE B 632 may transmit the SDP (SDP response/answer) to P-CSCF#2 650.

P-CSCF#2 650 may authorize a QoS resource for the selection of the media flows and the codices/avatar-related parameters. P-CSCF#2 650 may forward the SDP response/answer to S-CSCF#2 652. S-CSCF#2 652 may forward the SDP response/answer to S-CSCF#1 642 via I-CSCF#2 654. S-CSCF#1 642 may forward the SDP response/answer to P-CSCF#1 640.

P-CSCF#1 640 may authorize the QoS resource for the selection of the media flows and the codices/avatar-related parameters. P-CSCF#1 640 may forward the SDP response/answer to UE A 630.

UE A 630 may determine a media flow to be used for the session, and may determine a codec or avatar-related parameter to be used for each media flow.

When there one or more media flows or when there are one or more selections of codices or avatar-related parameters for a media flow, UE A 630 may transmit another offer to UE B 632 to negotiate codices or avatar-related parameters with UE B 632 in order to determine one codec or avatar-related parameter, or may determine a codec or avatar-related parameter by referring to a priority related to a codec or avatar-related parameter requested in the response message of UE B.

In addition, the transmitting UE (UE A) may identify the information about whether the movement is supported (FACS support indication) in the initial request message, and may perform a negotiation for a movement-related parameter through an additional procedure (operation 605 and operation 606) when the receiving UE (UE B) supports avatar-related movement expression. The receiving UE (UE B) may transmit the response message (604) including information that movement-related information is transmittable. The transmitting UE (UE A) may identify whether a supportable movement-related parameter is supported by the receiving UE in the response message (604), may receive only corresponding information (movement-related information rather than the entire 3D avatar data) of the receiving UE (UE B) in avatar rendering, and may provide the avatar call service to the user of the transmitting UE. When 3D avatar-related support is possible but the movement-related support information is not separately supported, the entire 3D avatar data needs to be transmitted in real time, in which case a negotiation for a new media flow considering a corresponding environment (bandwidth requirement) may be required.

For example, when the two UEs support 3D avatar-related data rendering and support a movement expression parameter, based on the 3D avatar-related parameter for the 3D avatar call, the two UEs may exchange the 3D avatars of the respective users after establishing the initial connection for the 3D avatar call service, and may then perform the 3D avatar call in real time with the users' movement information (FACS information or facial feature point coefficient). However, when execution of the 3D avatar call service is selected but at least one UE does not provide separate user movement information or does not provide suitable movement expression information (FACS type) for the counterpart's UE in operation 604, the entire 3D avatar data may be captured and generated in real time and transmitted to the UE providing no movement expression information in order to execute the 3D avatar call. In addition, when using the 3D avatar call service, the 3D avatar data may be shared or exchanged in advance between UE A and UE B and stored, or may be downloaded and stored when using a previous service. When the UEs have no counterparts' 3D avatar data, the UEs may exchange the 3D avatar data thereof in operation 610 after the initial parameter negotiation is completed through operation 602 and operation 604. In addition, when the counterpart users want to update the existing avatar data according to a user selection, the users may connect the service first by using the 3D avatar data downloaded in advance, or may exchange the 3D avatar data for updated 3D avatar data in operation 610 while using the service using an animation avatar and then replace the 3D avatar using the 3D avatar data, thereby providing and using the interactive 3D avatar call service.

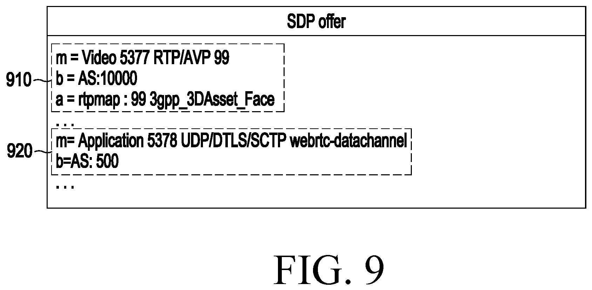

The receiving UE (UE B) 632 may fetch the SDP offer received through operation 602. In operation 602, the receiving UE may receive/obtain b = AS (see 910 of FIG. 9) in the SDP offer, and may determine whether b = AS is allowed. In an embodiment, the receiving UE may determine whether b = AS is allowed by comparing a maximum bit rate value allowed for the receiving UE with the value of b = AS. Here, b = AS denotes an application-specific (AS) bandwidth attribute. In an embodiment, b = AS in the SDP offer may indicate a maximum bandwidth related to corresponding media (application) designated by the transmitting UE.

When the value of b = AS is unacceptable compared to the maximum bit rate value allowed for the receiving UE, the receiving UE may reduce the value, and may transmit the SDP response (604) message including the reduced value to the transmitting UE. Subsequently, the receiving UE may determine whether the value of b = AS provided again from the transmitting UE is allowed.

When the value of b = AS is allowed, the receiving UE may select avatar content having an appropriate parameter (e.g., the number of points forming a 3D object and texture resolution), based on the value (allowed value).

When the UEs do not have the avatar data of the counterparts requesting the connection, the UEs request transmission of the avatar data. When the transmission bandwidth is sufficient and the rendering performance of the UE enables high-quality 3D object rendering in view of the bandwidth (b = AS) received in operation 602 and a related UE requirement (UE rendering requirement), the receiving UE may request and receive 3D avatar data having high resolution, such as 4K texture, based on the transmission bandwidth and the rendering performance. However, when content with high resolution may not be provided due to limitations in the transmission bandwidth of the transmitting UE, when the transmitting UE does not have content with high resolution, when the rendering performance of the receiving UE supports only low-resolution rendering (e.g., HD or full HD (FHD) resolution texture), or when the performance of the UE is limited in a real-time service, the receiving UE may request and receive 3D avatar content with low resolution from the transmitting UE.

For example, when selecting and requesting 3D avatar content in operation 602 and operation 604, 3D avatar content may be provided in forms classified and defined as kinds or profiles according to the type of 3D avatar content as illustrated in Table 1. As illustrated in Table 1, when the profile of specific 3D avatar data (e.g., when the content type is a 3D asset face) has a value of 0, the 3D avatar data may have face-related data (3gpp_3DAsset _FACE), and a corresponding avatar-related 3D object may include 3,000 points and texture with a resolution of 2 K. In addition, the specific 3D avatar data (e.g., when the content type is the 3D asset face) may be expressed with 12,000 points for more similar 3D content but a more precise expression according to a method of expressing details of the avatar-related 3D object, which corresponds to profile 1 in Table 1. Table 1 shows that profile 0 and profile 1 correspond to 3D avatar data enabling precise expression or movements but having the same texture resolution of 2 K assuming the same 3D avatar object (e.g., the 3D asset face).

In operation 602 and operation 604, the same kind of 3D avatars may be configured with different profiles depending on the codec and 3D asset-related parameters in the SDP message as shown in Table 1, and different profiles may be selected depending on the texture resolution of a UE and an object detail expression method (number of 3D object points) according to the bandwidth. For example, even in the same kind of avatars, considering the resolution of a rendering device and the level of details (LoD) according to a 3D object to be rendered and a virtual camera (the position of a counterpart user in a virtual space), profile 1 with a greater number of pieces of detailed information may be selected when the user of the receiving UE observes the 3D avatar object of the transmitting UE from a close location in the virtual space, or profile 0 with a smaller number of pieces of detailed information may be selected when the user of the receiving UE views the 3D object of the transmitting UE from a long distance, thereby using the active avatar service.

When 3D contents with 3D objects including the same number of points and the same texture resolution are provided, if a high frame rate of 90 fps or 120 fps is required in service content using a VR device depending on the type of content, a user movement may be expressed in more detail to render a natural facial expression. For example, the UEs may select a 3D asset profile of expressing a user movement in more detail to render a natural facial expression (e.g., profile 2 of expressing a relatively low detail/facial expression or profile 3 of relatively high expressing relatively high detail/facial expression in Table 1), thereby selecting an avatar content profile related to a movement associated with avatar data.

In addition, the UEs may select different texture resolution values for expressing a point having the same object and the same LoD and defined to express the same movement considering the rendering performance or the resolutions and transmission bandwidths of the UEs. When the bandwidths of both UEs for the interactive service are sufficient but the performances of the UEs support high-quality 3D avatar data considering the rendering performances or resolutions of the UEs, the UEs may select profile 2 with a resolution of 4 K resolution, and may exchange and store 3D avatar data, based on profile 2 to use the interactive service. However, the UEs may request 3D avatar data with a texture resolution of 2 K to use the service when the UEs have low performance or according to a user selection. As described above, the transmitting UE and the receiving UE may select different 3D avatar-related profiles depending on the performances of the UEs even in the same network environment, such as the same bandwidth.

Table 1 shows profiles and movement expression parameters when the content type of an avatar is a 3D asset face and a 3D asset full body.

**[Table 1]**

| | Number of points for 3D object | Number of feature points (If 3D object animation supported) | Texture Resolution | Profile |
|---|---|---|---|---|
| 3D Asset (Face) | 3000 | 51 | 2K | 0 |
| 3D Asset (Face) | 12000 | 51 | 2K | 1 |
| 3D Asset (Face) | 12000 | 51 | 4K | 2 |
| 3D Asset (Face) | 12000 | 86 | 4K | 3 |
| 3D Asset (Full Body) | 1,000,000 | 38 | 2K | 0 |
| 3D Asset (Full Body) | 4,000,000 | 294 | 2K | 1 |
| 3D Asset (Object) | | ... | | ... |
| ... | | ... | | ... |

The 3D avatar-related movement (animation) expression information may be provided together with a 3D avatar content characteristic and an associated movement as shown in Table 1 depending on a 3D avatar content generation method, or may be provided in an agreed form separately from 3D avatar content. The 3D avatar-related movement expression information may be generated in various forms (FACS and humanoid animation (H-ANIM)), and may be expressed using a representative characteristic as shown below in Table 2.

In the disclosure, avatar movement information (hereinafter, "movement information") refers to data used by a UE performing an avatar call service to render a movement of an avatar, and may be, for example, FACS information. In the disclosure, avatar-related movement expression information refers to information about a predefined avatar expression method for expressing a movement of the 3D avatar, and may be an FACS type in Table 2. The UE may generate 3D avatar movement information, based on avatar-related movement expression information, and may render a movement of the 3D avatar by using the avatar movement information.

In the process of transmitting the SDP answer message (604) to the transmitting UE (UE A) 630, each IMS node may start reserving a transmission resource of a wired and/or wireless network required for the service, and the transmitting UE may determine whether the receiving UE supports the avatar-related movement expression information through an additional procedure in the process, and may negotiate for specific movement expression information (e.g., feature point information expressing animation of the 3D avatar data and a movement expression method based on an animation feature point of the avatar), based on the 3D avatar data. In FIG. 6, it is assumed that the feature point-based movement expression method is not indicated in the response message of operation 604, and the transmitting UE receives only information about whether a feature point-based movement expression for the avatar call is supported (i.e., FACS support indication) and negotiates for a specific movement expression parameter through a separate negotiation with the receiving UE. In this case, avatar-related movement expression information and parameters provided by each UE may be negotiated through a separate additional request (operation 605 and operation 606).

The transmitting UE 630 may obtain the information about whether the movement expression is supported (FACS support indication) in the SDP answer message received in operation 604. When the receiving UE (UE B) 632 supports 3D avatar-related movement expression information, the transmitting UE 630 may transmit specific 3D avatar-related movement (animation) expression information (e.g., the FACS type in Table 2) associated with the 3D avatar data (negotiated through operation 602 and operation 604) to the receiving UE 632 via an SIP update request including the SDP offer message in operation 605.

In operation 605, the 3D avatar-related movement expression information may include the avatar movement expression information and parameters (e.g., the FACS type or the number of feature points and the FACS expression type) related to the 3D avatar data (e.g., 3gpp_3DAsset_Face) supported by the transmitting UE (UE A) in operation 602 and, additionally, 3D avatar-related movement expression information of the receiving UE that the transmitting UE requests from the receiving UE, based on the 3D avatar data information supported by the receiving UE. The 3D avatar-related movement expression information may be defined as information about how finely the 3D avatar data is moved (number of feature points) according to the parameters of the 3D avatar data or information about how to express a movement of the points (expression type).

Here, the 3D avatar-related movement expression information may be defined in a predefined profile form, based on information about how finely the 3D avatar data is moved (number of feature points) according to the type of the 3D avatar data or information about how to express a movement of the points (expression type). In the 3D avatar data, facial movement expression information may be expressed using a facial action coding system (FACS), in which a facial point (feature point) for expressing a facial expression based on human facial muscle movement information, or be expressed in a separately agreed form for each application or service provider.

In addition, an expression of the 3D avatar data may vary depending on the transmission bandwidth in operation 602 and operation 604, and when requesting 3D avatar-related movement expression information, the type of movement expression information may also vary depending on the type of a 3D avatar according to the transmission bandwidth. For example, in the 3D avatar-related parameter negotiation process, a 3D avatar with high-resolution texture provides a large number of feature points, and to express a movement of the avatar, the movement needs to be expressed based on a large number of feature points to deliver natural facial expression information. In this case, an expression type (e.g., an emotion type and a feature point coefficient type) is the same based on the 3D avatar, but the number of feature points for expressing a facial movement may be increased in order to express an expression of the avatar in more detail.

For example, Table 2 illustrates 3D avatar-related movement expression information (FACS type) 2 and 3 having the same motion expression type of "Intensity". When the value of 3D avatar-related movement expression information (FACS type) in Table 2 is determined as 2 to use the interactive service, based on low-resolution 3D object content including 3000 points considering the user preference, UE rendering performance, bandwidth information obtained in the SDP negotiation process, and the type of 3D content that the counterpart UE is able to provide, the facial movement of the low-resolution 3D avatar content may be expressed using information about 51 facial feature points and variance in the feature points. However, when the bandwidth is improved due to a change in the network environment while using the service to make possible to provide the service based on high-resolution 3D object content including 12000 points, the value of avatar facial movement expression information may need to be changed to 3, thereby expressing the high-definition 3D avatar content by using 86 feature points and variance in the feature points. Information for expressing the movement of the 3D avatar in operation 605 and operation 606 may be provided based on the rendering performance of the UE and the 3D avatar data information (texture resolution of 3D avatar) received in operation 602 and operation 604, and an additional negotiation may be conducted based on the information.

Table 2 shows FACS types as examples of avatar-related movement expression information.

**[Table 2]**

| FACS Type | Number of Feature Points | Expression type |
|---|---|---|
| 0 | 7 | Emotion (Happy, Fear, Sad, etc.) |
| 1 | 51 | Coefficient Value (Float) |
| 2 | 51 | Intensity |
| 3 | 86 | Intensity |
| ... | ... | ... |

In operation 606, the receiving UE may determine whether the receiving UE supports the 3D avatar movement expression information transmitted by the transmitting UE, based on the 3D avatar-related movement expression information supported by the transmitting UE in operation 605, and may prioritize 3D avatar-related movement expression information (e.g., FACS types) requested by the receiving UE and transmit the same in a list. The 3D avatar-related movement expression information supported by the receiving UE to be transmitted by the receiving UE to the transmitting UE may be forwarded to the transmitting UE via a response message (e.g., a 200 OK message).

In operation 607, operation 608, and operation 609, the transmitting UE/receiving UE complete the negotiation for the 3D avatar data and the related movement expression information and then complete session establishment.

In operation 610, when the transmitting UE and the receiving UE do not have the 3D avatar data of the counterparts, the transmitting UE and the receiving UE may request and exchange the 3D avatar data with the counterpart UEs, based on the priorities of the 3D avatar-related data and the related parameters in operation 602 and operation 604. When a 3D avatar call service user already has avatar data of a counterpart, the user may provide a 3D avatar call service with the avatar data after negotiating for 3D avatar call-related information. However, when the 3D avatar call service user does not have the avatar data of the counterpart, the user may first perform a procedure of receiving (or downloading) the 3D avatar data according to a selection of the user and an operator. In addition, when the 3D avatar call service user does not have the 3D avatar of the counterpart and thus is downloading the 3D avatar, the user may generate an avatar call connection, based on an avatar without animation in the form of a character or cartoon, according to a selection of the user, and may switch from an animation-based 3D avatar call to an actual image-based 3D avatar call when the 3D avatar data of the counterpart is completely received (downloaded).

In operation 611, each of the transmitting UE 630 and the receiving UE 632 may generate movement information, based on the 3D avatar-related movement expression information negotiated in operation 605 and operation 606. In the 3D avatar-related movement expression information, a point may be generated by extracting a facial feature point in the form of depth based on a time-of-flight (ToF) camera or a structure-type infrared camera according to the capability of the UE, in which case the transmitting UE 630 and the receiving UE 632 generates the movement information including information about a feature point for expressing facial expression information among all points expressing a face and information about an expression type for variance in the movement of the feature point, based on the expression type of Table 2 received in operation 605 and operation 606.

For example, in type 0 in Table 2, information about an agreed expression (e.g., happiness, fear, and sadness) is transmitted, which may be indicated with the movement of an agreed feature point or simple expression information (e.g., seven expressions). In type 1 or 2 in Table 2, 51 facial feature points may be extracted based on captured face information about the user and be expressed as the value of variance in movement of the point (e.g., type 1: floating value or type 2: intensity (integer value)).

The 3D avatar data and the feature point information to express the movement of the face may be designated and provided by configurations of the UE and the service provider in a form agreed when the 3D avatar data is generated for each FACS type. When generating the 3D avatar data, the feature point information (e.g., a location mapped between an actual image and the avatar) may vary depending on the UEs and a 3D avatar application, but the number of feature points and the movement expression method are provided in an agreed form, and thus the 3D avatar data and the 3D avatar-related movement expression information are provided in an associated form. Therefore, pieces of feature point information in the 3D avatar information and the 3D avatar-related movement expression information may differ in a generation method (e.g., a method of extracting a feature point from an image) depending on the UEs, but have a common feature of a certain form.

In operation 612, the transmitting UE 630 and the receiving UE 632 may transmit the avatar movement information, based on the information obtained through the 3D avatar-related movement expression parameter negotiation process in operation 604 and operation 605. The transmitting UE 630 and the receiving UE 632 may perform the real-time 3D avatar call, based on the avatar movement information.

Subsequently, the transmitting UE 630 and the receiving UE 632 may terminate an RTP session for exchanging the 3D avatar data through operation 613 and operation 614.

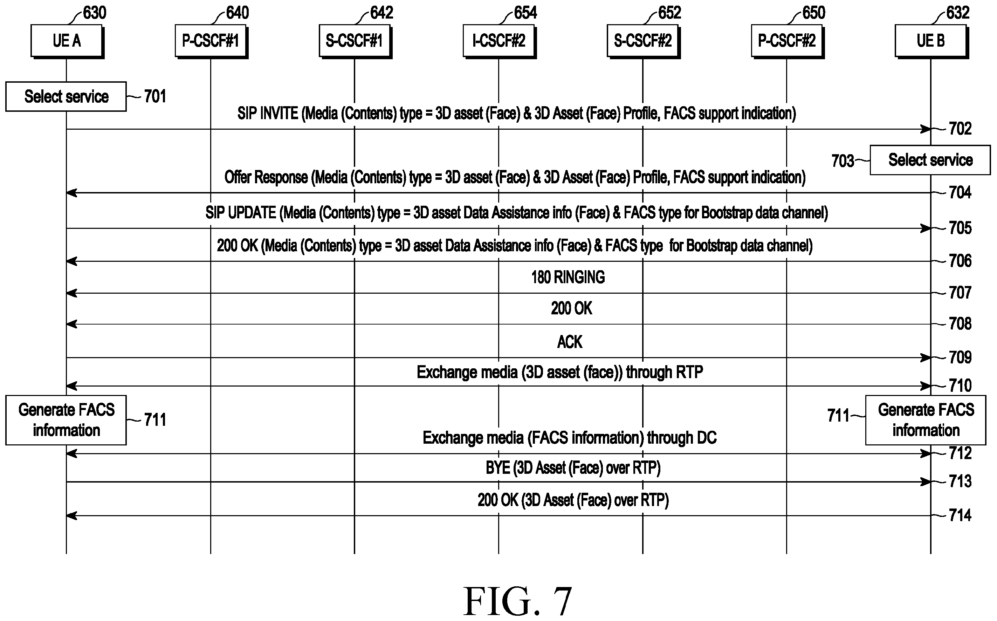

FIG. 7 illustrates a procedure in which a transmitting UE (UE A) and a receiving UE (UE B) negotiate for a parameter and guarantee QoS of a wired or wireless transmission path in a transmission method for performing an avatar video call using an IP multimedia subsystem (IMS) according to an embodiment of the disclosure. In FIG. 7, avatar data and avatar-related movement information may be transmitted through separate paths. In the current IMS structure, media content-related information using a codec may be transmitted using an RTP, and data for supporting an interactive service without using an additional codec may be transmitted through a WebRTC-based data channel.

In operation 701, the transmitting UE (UE A) 630 may select a video call using a 3D avatar when connecting a video call according to a user's selection or a predefined configuration.

In operation 702, the transmitting UE 630 may determine at least one of a codec(s) and a 3D avatar-related parameter(s) based on the RTP and insert the selected one into a payload of an SDP message for 3D avatar data, may determine a parameter(s) for 3D avatar-related movement information by using the WebRTC-based data channel and insert the parameter into the payload of the SDP message, and may transmit the message to the receiving UE 632, thereby performing a connection request. The codec(s) or 3D avatar-related parameter(s) inserted in the payload of the SDP message may reflect the UE performance of the transmitting UE and user preference (such as the user's selection in operation 701) for a supportable session. The transmitting UE 630 may generate the SDP message (e.g., an SDP offer) including a bandwidth requirement and each characteristic, and may assign a local port number for each possible media flow.

In operation 703, as in the operation of the transmitting UE (UE A) 630 in operation 701, the receiving UE (UE B) 632 may select a video call using a 3D avatar when accepting connection of the interactive service according to a user preference or a predefined configuration. UE B 632 may determine a complete set of codices or 3D avatar-related parameters supportable for the session. UE B 632 may determine an intersection with the codices and the avatar-related parameters in the SDP (SDP offer) in an invite message.

In operation 704, UE B 632 may transmit an SDP (SDP response/answer) listing a common media flow and codec, a 3D avatar-related parameter, and information about whether a 3D avatar movement is supported (FACS support indication) to UE A 630. UE A 630 may determine a media flow to be used for the session, and may determine a codec or 3D avatar-related parameter to be used for each media flow.

When there are one or more media flows or when there are one or more selections of codices or 3D avatar-related parameters for a media flow, UE A 630 may transmit another offer to UE B 632 to negotiate codices or 3D avatar-related parameters with UE B 632 in order to determine one codec or 3D avatar-related parameter, or may determine a codec or 3D avatar-related parameter by referring to a priority related to a codec or 3D avatar-related parameter requested in the response message of UE B.

In addition, the transmitting UE (UE A) may identify the information about whether the movement is supported (FACS support indication) in the initial request message, and may perform a negotiation for a movement expression parameter through an additional procedure (operation 705 and operation 706) when the receiving UE (UE B) supports 3D avatar-related movement expression.

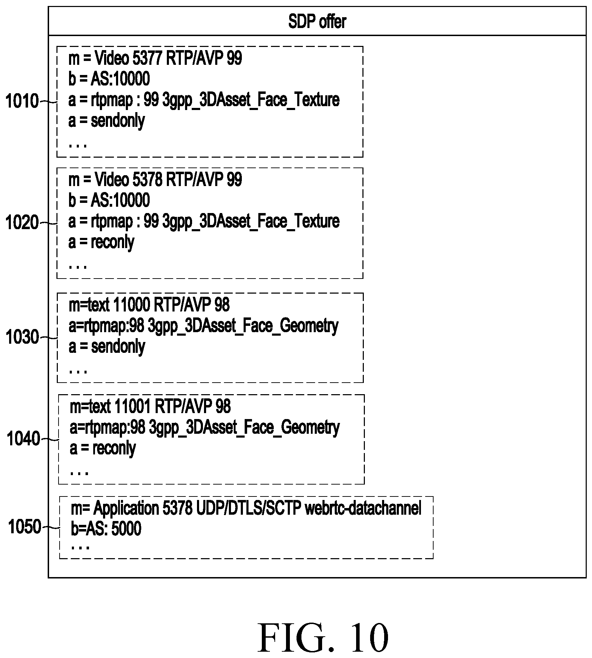

The transmitting UE 630 may obtain the information about whether the movement expression is supported (FACS support indication) in the SDP answer message received in operation 704. When the receiving UE (UE B) 632 supports 3D avatar-related movement expression information (e.g., an FACS type), the transmitting UE 630 may transmit specific 3D avatar-related movement (animation) expression information (e.g., an FACS type for a Bootstrap data channel) (see 920 of FIG. 9 and 1050 of FIG. 10) associated with the 3D avatar data (negotiated through operation 702 and operation 704) to the receiving UE 632 via an SIP update request including the SDP offer message in operation 705.

In operation 706, the receiving UE may determine whether the receiving UE supports the 3D avatar movement expression information transmitted by the transmitting UE, based on the 3D avatar-related movement expression information supported by the transmitting UE in operation 705, and may prioritize 3D avatar-related movement expression information (e.g., the FACS type for the Bootstrap data channel) supportable and providable by the receiving UE and transmit the same in a list. The 3D avatar-related movement expression information to be transmitted by the receiving UE to the transmitting UE may be forwarded to the transmitting UE via a response message (e.g., a 200 OK message).

In operation 707, operation 708, and operation 709, the transmitting UE/receiving UE complete the negotiation for the 3D avatar-related data information and the related movement expression information and then complete session establishment.

Through the foregoing operations, the transmitting UE and the receiving UE negotiate for the parameters for exchanging the 3D avatar data supported by each UE and the parameters (e.g., the FACS type for the Bootstrap data channel) for exchanging the 3D avatar-related movement information, and may establish a session for the 3D avatar-related data based on the RTP and a session for the 3D avatar-related movement information based on the WebRTC-based data channel (DC), based on the negotiated information.

In operation 710, when one UE or both UEs (transmitting UE and receiving UE) do not have the 3D avatar data in advance, an animation-based 3D avatar call may be established and served first according to a user selection. Through operation 710, the process of exchanging the 3D avatar-related data provided by the UEs may be completed.

In operation 711, each of the transmitting UE 630 and the receiving UE 632 may generate 3D avatar-related movement information, based on the 3D avatar-related movement expression information obtained in operation 704 and operation 705 and facial feature point movement variance information of each service user. In operation 712, the transmitting UE 630 and the receiving UE 632 may exchange the 3D avatar-related movement information generated in operation 711 through the WebRTC-based data channel. Each UE may perform the 3D avatar call service in real time by reflecting the feature point variance information for expressing a movement of the 3D avatar, based on the 3D avatar data received in operation 710 and the 3D avatar-related movement information exchanged through the data channel in operation 712.

Subsequently, the RTP session for exchanging the 3D avatar data may be terminated through operation 713 and operation 714.

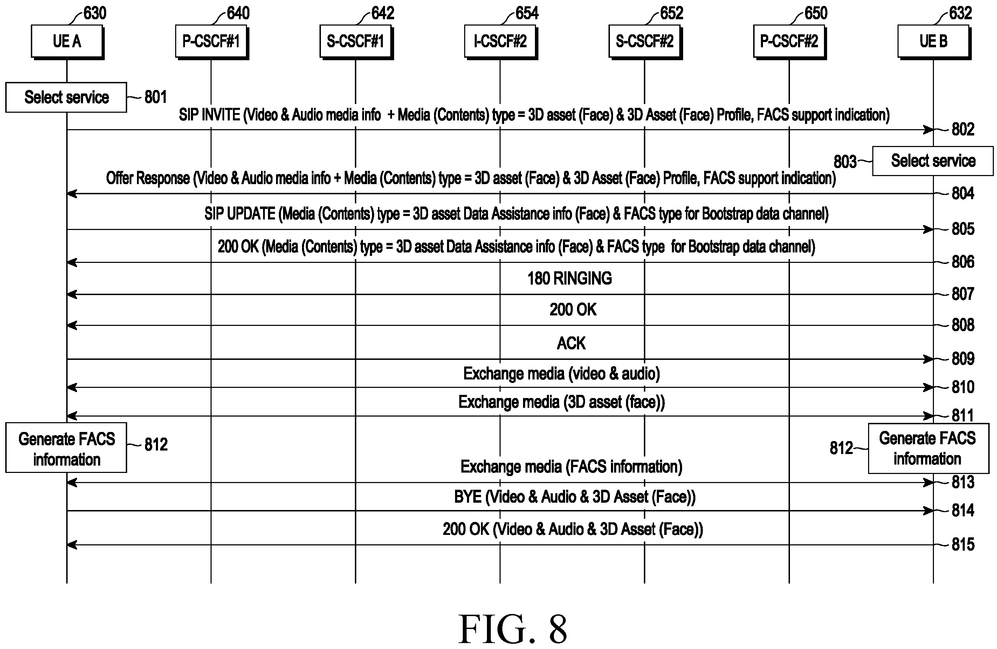

FIG. 8 illustrates a procedure in which a transmitting UE (UE A) and a receiving UE (UE B) negotiate for a parameter and guarantee QoS of a wired or wireless transmission path in a transmission method for performing an avatar video call using an IP multimedia subsystem (IMS) according to an embodiment of the disclosure. In FIG. 8, the transmitting UE or the receiving UE may select a pre-connection mode (video or voice call) before connecting the avatar call (when there is a connection delay due to a process of downloading 3D avatar data).

In operation 801, the transmitting UE (UE A) 630 may select a video call using a 3D avatar when connecting a video call according to a user's selection or a predefined configuration.

In operation 802, the transmitting UE 630 may determine at least one of a codec(s) and a 3D avatar-related parameter(s) and insert the selected one into a payload of an SDP message, and may also determine and insert at least one of a codec and parameters related to an existing video or audio call-based call connection mode to be used when there is a delay in connecting the 3D avatar call due to a process of downloading 3D avatar data. The inserted codec(s) or 3D avatar-related parameter(s) may reflect the UE performance of the transmitting UE and user preference (such as the user's selection in operation 801) for a supportable session. The transmitting UE 630 may assign a local port number for each possible media flow, and may generate the SDP message (e.g., an SDP offer) including a bandwidth requirement and each characteristic and transmit the SDP message to the receiving UE (UE B) 632.

In operation 803, as in the operation of the transmitting UE (UE A) 630 in operation 801, the receiving UE (UE B) 632 may select a video call using a 3D avatar when accepting connection of the interactive service according to a user preference or a predefined configuration. UE B 632 may determine a complete set of codices or 3D avatar-related parameters supportable for the session. In addition, like the transmitting UE 630 in operation 802, the receiving UE 632 may determine and select a codec and parameters related to the existing video or audio-based call connection mode to be used according to a selection of a service provider or the receiving UE when there is a delay in connecting the 3D avatar call using a 3D avatar. UE B 632 may determine an intersection with the codices and the avatar-related parameters in the SDP (SDP offer) in an invite message.

In operation 804, UE B 632 may transmit an SDP (SDP response/answer) including at least one of information listing a common media flow and codec, a 3D avatar-related parameter, and information about whether a 3D avatar movement is supported (FACS support indication) to UE A 630. UE A 630 may determine a media flow to be used for the session, and may determine a codec or 3D avatar-related parameter to be used for each media flow.

When there are one or more media flows or when there are one or more selections of codices or 3D avatar-related parameters for a media flow, UE A may transmit another offer to UE B 632 to negotiate codices or 3D avatar-related parameters with UE B 632 in order to determine one codec or 3D avatar-related parameter, or may determine a codec or 3D avatar-related parameter by referring to a priority related to a codec or 3D avatar-related parameter requested in the response message of UE B.

In addition, the transmitting UE (UE A) may identify the information about whether the movement is supported (FACS support indication) in the initial request message, and may perform a negotiation for a movement expression parameter through an additional procedure (operation 805 and operation 806) when the receiving UE (UE B) supports 3D avatar-related movement expression.

The transmitting UE 630 may obtain the information about whether the movement expression-related information is supported (FACS support indication) in the SDP answer message received in operation 804. When the receiving UE (UE B) 632 supports 3D avatar-related movement expression information (e.g., an FACS type), the transmitting UE 630 may transmit specific 3D avatar-related movement (animation) expression information (e.g., an FACS type for a Bootstrap data channel) associated with the 3D avatar data (negotiated through operation 802 and operation 804) to the receiving UE 632 via an SIP update request including the SDP offer message in operation 805.

In operation 806, the receiving UE may determine whether the receiving UE supports the 3D avatar movement expression information transmitted by the transmitting UE, based on the 3D avatar-related movement expression information supported by the transmitting UE in operation 805, and may prioritize 3D avatar-related movement expression information (e.g., the FACS type for the Bootstrap data channel) supportable and providable by the receiving UE and transmit the same in a list. The 3D avatar-related movement expression information to be transmitted by the receiving UE to the transmitting UE may be forwarded to the transmitting UE via a response message.

In operation 807, operation 808, and operation 809, the transmitting UE/receiving UE complete the negotiation for the 3D avatar-related data information and the related movement expression information and then complete session establishment.

Through the foregoing operations, the transmitting UE and the receiving UE negotiate for the parameters for exchanging the 3D avatar data supported by each UE and the parameters (e.g., the FACS type for the Bootstrap data channel) for exchanging the 3D avatar-related movement information, and may also negotiate for a parameter related to a voice or video call to be used in the initial connection when there is a delay in connecting the 3D avatar call, thereby completing establishment of each session.

In operation 810, when one UE or both UEs (transmitting UE and receiving UE) do not have the 3D avatar data in advance, connection of a video call may be established first according to a user selection.

In operation 811, the process of exchanging the 3D avatar-related data provided by the UEs may be completed.

In operation 812, each of the transmitting UE 630 and the receiving UE 632 may generate 3D avatar-related movement information, based on the information obtained in the process of negotiating for the 3D avatar-related movement expression parameter in operation 804 and operation 805 and facial feature point movement variance information of the user. In operation 813, the transmitting UE 630 and the receiving UE 632 may exchange the 3D avatar-related movement information generated in operation 812. Each UE may perform the 3D avatar call service in real time by reflecting the variance information, based on the 3D avatar data received in operation 811 and the 3D avatar-related movement information exchanged in operation 812.

Subsequently, a session related to the video call and the RTP session for exchanging the 3D avatar data may be terminated through operation 814 and operation 815.

FIG. 9 illustrates an example of an SDP offer according to an embodiment of the disclosure.

In the embodiment of FIG. 9, the SDP offer may be an SDP offer (SDP offer message) transmitted by a transmitting UE in a single stream media session configuration.

Referring to FIG. 9, the SDP offer may include an SDP attribute *3gpp_3DAsset_Face (a=3gpp_3DAsset_Face)* 910 in a media description (e.g., m = lines) in the SDP offer. Hereinafter, an operation of identifying 3D avatar data (or 3D avatar facial data), based on the SDP attribute *3gpp_3DAsset_Face* 910 and parameters (3D avatar-related SDP attribute parameters) included in the SDP attribute *3gpp_3DAsset_Face* (910) is described. The SDP attribute *3gpp_3DAsset_Face* may also be expressed as *3DAsset_Face.*

### <Embodiment 1: Identification of 3D avatar facial data stream>

An SDP attribute *3gpp_3DAsset_Face* may be used to indicate/identify facial data among 3D avatar objects.

The semantics of the attribute may be as follows.

Immersive Teleconferencing and Telepresence for Remote Terminals (ITT4RT) (transmitting and receiving) clients supporting 3D avatar facial data may support a *3gpp_3DAsset_Face* attribute, and may support the following procedures.
- When transmitting an SDF offer, the ITT4RT-Tx (transmitting) client may include a *3gpp_3DAsset_Face* attribute in a media description for a video in the SDP offer.
- When transmitting an SDP answer, the ITT4RT-Rx (receiving) client may include the *3gpp_3DAsset_Face* attribute in a media description for a video in the SDP answer if the *3gpp_3DAsset_Face* attribute is received in the SDP offer.
- After successful negotiation for the *3gpp_3DAsset_Face* attribute in the SDP, a Multimedia Telephony Service for IMS (MTSI) client may exchange RTP-based texture image/video streams including HEVC or AVC and RTP-based geometry information including binary data together with a 3D avatar asset data configuration information scene description (SD) message.

The ITT4RT-Tx (transmitting) client supporting both 3D avatar data (avatar full body (FB) or half body (HB)) and 3D avatar facial data (avatar face only) may include all of *3gpp_3DAsset, 3gpp_3DAsset_Face, 3gpp_3DAsset_FB,* and *3gpp _3DAsset_HB* attributes in the SDP offer, while the ITT4RT-Rx (receiving) client may include only one attribute (one of the *3gpp_3DAsset, 3gpp_3DAssetFace, 3gpp_3DAsset_FB,* and *3gpp_3DAsset_HB* attributes based on support or selection) in the SDP answer. A media type for transmitting avatar facial data may be expressed as *3gpp_3DAsset_Face* or *3DAsset_Face.* A media type for transmitting avatar full body data may be expressed as *3gpp_3DAsset_FB or 3DAsset_FB.* A media type for transmitting avatar half body data may be expressed as *3gpp_3DAsset_HB or 3DAsset_HB.*

In the disclosure, ITT4RT refers to an MTSI client supporting an ITT4RT feature. In the disclosure, an ITT4RT-Tx client may refer to an ITT4RT client capable of only transmitting 3D avatar (face) data. An ITT4RT-Rx client may refer to an ITT4RT client capable of only receiving 3D avatar (face) data. An MTSI client may be a function within a UE or a network entity (e.g., a Media Resource Function Processor (MRFP)) supporting MTSI.

### <Embodiment 2: 3D avatar facial data SDP attribute parameters>

A media-line level parameter may be defined not only to describe 3D avatar facial data as identified by the *3gpp_3DAsset_Face* attribute but may also to support establishment of a session between an ITT4RT-Tx (transmitting) client and an ITT4RT-Rx (receiving) client for the 3D avatar facial data.

### • Stream packing of 3D avatar facial data

Packing of 3D avatar facial data in a stream may be negotiated between a transmitting UE and a receiving UE depending on UE device performance and bandwidth availability.
- Number of 3D object (avatar facial) points: This parameter in an SDP offer indicates the number of points forming a 3D object related to the avatar facial data.
- Texture resolution: This parameter in the SDP offer indicates the resolution of texture forming the 3D object related to the avatar facial data.
- Number of feature points in avatar face: This parameter in the SDP offer indicates the number of feature points in an avatar face for expressing a movement of the avatar facial data.

FIG. 10 illustrates an example of an SDP offer according to an embodiment of the disclosure.

In the embodiment of FIG. 10, the SDP offer may be an SDP offer (SDP offer message) including 3D avatar facial data.

In FIG. 10, it is assumed that the 3D avatar facial data supports a payload type divided into two types of texture and geometry (e.g., 3gpp_3DAsset_Face_Texture and 3DAsset_Face_Geometry).

When texture-related data of the 3D avatar facial data is defined as a video-related media description as 3gpp_3DAsset_Face_Texture, the SDP offer may include a first media description (m = lines #1) 1010 corresponding to a = sendonly and a second media description (m = lines #2) 1020 corresponding to a = recvony. The first media description may include *3gpp*_*3DAsset_Face_Texture (a=3gpp_3DAsset_Face*_*Texture)* 1010, which is a first SDP attribute, and *3gpp*_*3DAsset_Face_Texture (a=3gpp_3DAsset_Face*_*Texture)* 1020, which is a second SDP attribute.

Further, when geometry-related data of the 3D avatar facial data is separately defined as a text-related media description as 3gpp_3DAsset_Face_Geometry, the SDP offer may include a third media description (m = lines #3) 1030 corresponding to a = sendonly and a fourth media description (m = lines #4) 1040 corresponding to a = recvony. The third media description may include *3gpp*_*3DAsset_Face_Geometry (a=3gpp*_*3DAsset_Face_Geometry)* 1030, which is a third SDP attribute, and *3gpp*_*3DAsset_Face_Geometry (a=3gpp*_*3DAsset_Face_Geometry)* 1040, which is a fourth SDP attribute.

A fifth media description (m = lines #5) 1050 of FIG. 10 shows that a transmitting UE supports avatar face-related 3D object data movement information with a separate DC (data channel).

A method for generating an SDP answer when a receiving UE receives the offer illustrated in FIG. 8 may be illustrated as follows.
1. Case where the receiving UE does not support 3D avatar facial data (Case 1): The receiving UE may signal that the receiving UE will not receive 3D avatar data as in a normal SDP media negotiation (e.g., by configuring a port number to 0).
2. Case where the receiving UE supports 3D avatar facial data and characteristics of 3D avatar facial data processing and rendering performance of the receiving UE are the same as corresponding characteristics in the SDP offer (Case 2): The receiving UE may select a 3D avatar facial data payload type (e.g., texture and geometry), based on a 3D avatar facial data-related parameter provided via the SDP offer, and may include information related to the selection in the SDP answer. Here, the 3D avatar facial data-related parameter may include at least one of a 3D object data compression method (e.g., PCC or mesh), the number of points expressing corresponding 3D data, a texture encoding method, and texture resolution. For example, the receiving UE may select one or two 3D avatar facial data payload types for the SDP answer.
3. Case where transmission and reception of 3D avatar facial data are supported but the characteristics of 3D avatar facial data processing and rendering performance of the receiving UE are different from the corresponding characteristics in the SDP offer (Case 3): The receiving UE may respond with two 3D avatar facial data media lines (m =) each configured to a = sendonly and a = recvonly.

In an embodiment, for a media line (3D avatar facial data media line) configured to a = recvonly, as illustrated in Case 2, the receiving UE may select a 3D avatar facial data payload type, based on a 3D avatar facial data-related parameter provided in the SDP offer, and may include information related to the selection in the SDP answer. In this case, one or more 3D avatar facial data payload types may be selected for the SDP answer.

In another embodiment, for a media line configured to a = sendonly, the receiving UE may describe the media line (or SDP attribute 3gpp_3DAsset_Face) in the SDP answer considering the processing capability of the receiving UE and/or a 3D avatar face-related parameter (of the transmitting UE). In this case, an additional SDP exchange may be required for a negotiation for the media line configured to a = sendonly in the SDP answer transmitted by the receiving UE.

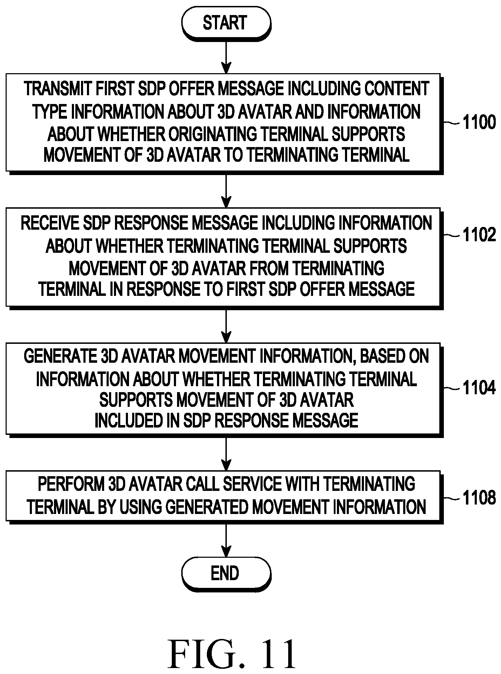

FIG. 11 illustrates a method in which an originating UE performs a media call according to the disclosure.

The originating UE may transmit a first SDP offer message including information indicating the content type of at least one avatar and information about whether the originating UE supports a movement of the at least one avatar to a terminating UE (1100, 602, 702, or 802). The first SDP offer message may further include a profile of the content type of the at least one avatar, and the number of points, the number of feature points, or the texture resolution of the at least one avatar may be identified by the content type and the profile. The first SDP offer message may further include video media information or audio media information. Optionally, the video media information or the audio media information may be used to establish a call connection until the originating UE receives data of the at least one avatar media (e.g., a 3D avatar).

The originating UE may receive an SDP response message including information about whether the terminating UE supports the movement of the at least one avatar from the terminating UE in response to the first SDP offer message (1102, 604, 704, or 804).

In addition, the originating UE may transmit a second SDP offer message including movement expression information about the at least one avatar to the terminating UE, based on the information about whether the terminating UE supports the movement (605, 705, or 805). The originating UE may receive a response message including the movement expression information about the at least one avatar from the terminating UE in response to the second SDP offer message (606, 706, or 806). The movement expression information about the at least one avatar may include at least one of an FACS type, the number of feature points, or an expression type of the feature points. The movement expression information about the at least one avatar may indicate a separate data channel via which movement information is transmitted.

The originating UE may generate movement information about the at least one avatar, based on the information about whether the terminating UE supports the movement included in the SDP response message (1104, 611, 711, or 812).

The originating UE may perform an avatar call service with the terminating UE by using the generated movement information (1106). Specifically, the originating UE may transmit the generated movement information to the terminating UE, may receive avatar movement information about the terminating UE from the terminating UE, may render an avatar of the terminating UE by using the avatar movement information about the terminating UE, and may perform the avatar call service with the terminating UE by using the rendered avatar of the terminating UE.

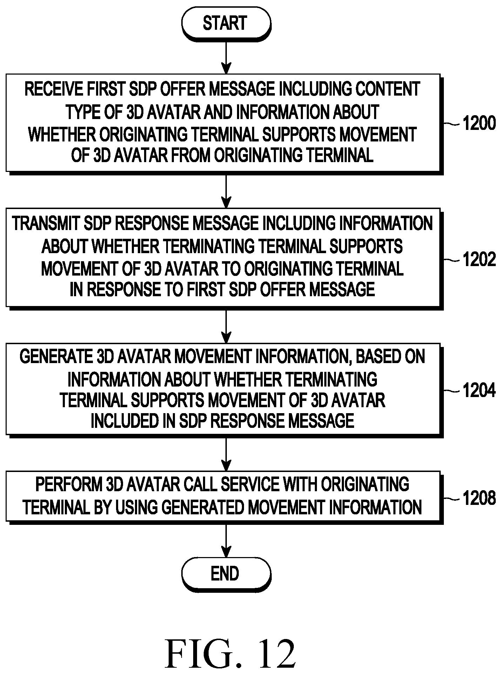

FIG. 12 illustrates a method in which a terminating UE performs a media call according to the disclosure.

The terminating UE may receive a first SDP offer message including information indicating the content type of at least one avatar and information about whether an originating UE supports a movement of the at least one avatar from the originating UE (1200, 602, 702, or 802). The first SDP offer message may further include a profile of the content type of the at least one avatar, and the number of points, the number of feature points, or the texture resolution of the at least one avatar may be identified by the content type and the profile. The first SDP offer message may further include video media information or audio media information. The video media information or the audio media information may be used to establish a call connection until the terminating UE receives data of the at least one avatar media (e.g., a 3D avatar).

The terminating UE may transmit an SDP response message including information about whether the terminating UE supports a movement of the at least one avatar to the originating UE in response to the first SDP offer message (1202, 604, 704, or 804).

In addition, the terminating UE may receive a second SDP offer message including movement expression information about the at least one avatar from the originating UE (605, 705, or 805), and may transmit a response message including movement expression information about the at least one avatar to the originating UE in response to the second SDP offer message (606, 706, or 806). The movement expression information about the at least one avatar may include at least one of an FACS type, the number of feature points, or an expression type of the feature points. The movement expression information about the at least one avatar may indicate a data channel via which movement information is transmitted.

The terminating UE may generate movement information about the at least one avatar, based on the information about whether the terminating UE supports the movement included in the SDP response message (1204, 611, 711, or 812).

The terminating UE may perform an avatar call service with the originating UE by using the generated movement information (1206). Specifically, the terminating UE may transmit the generated movement information to the originating UE, may receive avatar movement information about the originating UE from the originating UE, may render an avatar of the originating UE by using the avatar movement information about the originating UE, and may perform the avatar call service with the originating UE by using the rendered avatar of the originating UE.

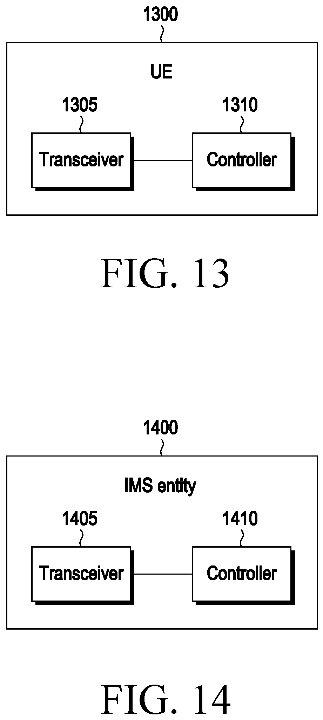

FIG. 13 illustrates the configuration of a UE device according to the disclosure.

The UE 1300 may include a transceiver 1305 that performs signal transmission and reception with another UE or a network entity and a controller 1310 that controls all operations of the UE 1300. All methods performed by the originating UE 630 and the terminating UE 632 described in the disclosure may be understood as being performed by control of the controller 1310.

The controller 1310 and the transceiver 1305 are not necessarily configured as separate devices, but may be configured as a single component, such as a single chip.

The controller 1310 may be configured as a single processor in the UE 1300.

FIG. 14 illustrates the device configuration of an IMS entity according to the disclosure.

The IMS entity 1400 of FIG. 14 illustrates the device configuration of a plurality of network entities, such as a P-CSCF, an S-CSCF, and an I-CSCF, described in the disclosure.

The IMS entity 1400 may include a transceiver 1405 that performs signal transmission and reception with another IMS entity or a UE and a controller 1410 that controls all operations of the IMS entity 1400. All methods performed by the IMS entity in the disclosure may be understood as being performed by control of the controller 1410.

The controller 1410 and the transceiver 14005 are not necessarily configured as separate devices, but may be configured as a single component, such as a single chip.

The controller 1410 may be configured as a single processor in the IMS entity 1400.

It should be noted that the diagrams illustrating system configurations, the diagrams illustrating protocols, the diagrams illustrating methods, and the diagrams illustrating device configurations illustrated above in FIG. 1 to FIG. 14 are not intended to limit the scope of the rights of the disclosure. That is, not all of the configurations or operations described in FIG. 1 to FIG. 14 should be construed as essential components for implementing the disclosure, and the disclosure may be implemented within a scope that does not harm the essence of the disclosure even if only some of the components are included.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The one or more programs include instructions that cause the electronic device to perform the methods according to embodiments of the disclosure as defined by the appended claims or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method by an originating user equipment (UE) performing a media call service in a wireless communication network, the method comprising:
transmitting, to a terminating UE, a first session description protocol (SDP) offer message including information indicating a content type of at least one avatar, and information on whether the originating UE supports a movement of the at least one avatar;
receiving, from the terminating UE, an SDP response message including information on whether the terminating UE supports the movement of the at least one avatar in response to the first SDP offer message;
generating movement information on the at least one avatar, based on the information on whether the terminating UE supports the movement of the at least one avatar included in the SDP response message; and
performing an avatar call service with the terminating UE by using the generated movement information.

2. The method of claim 1, further comprising:
transmitting, to the terminating UE, a second SDP offer message including movement expression information on the at least one avatar, based on the information on whether the terminating UE supports the movement of the at least one avatar; and
receiving, from the terminating UE, a response message including the movement expression information on the at least one avatar in response to the second SDP offer message.

3. The method of claim 1, wherein the first SDP offer message further includes a profile of the content type of the at least one avatar, and
wherein a number of points, a number of feature points, or texture resolution of the at least one avatar are identified by the content type and the profile.

4. The method of claim 2, wherein the movement expression information on the at least one avatar includes at least one of a facial action coding system (FACS) type, a number of feature points, or an expression type of the feature points.

5. The method of claim 1, wherein performing the avatar call service with the terminating UE by using the generated movement information comprises:
transmitting, to the terminating UE, the generated movement information;
receiving, from the terminating UE, avatar movement information on the terminating terminal;
rendering an avatar of the terminating UE by using the avatar movement information on the terminating UE; and
performing the avatar call service with the terminating UE by using the rendered avatar of the terminating UE.

6. The method of claim 2, wherein the movement expression information on the at least one avatar indicates a data channel via which the movement information is transmitted.

7. The method of claim 1, wherein the first SDP offer message further includes video media information or audio media information, and
wherein the method further comprises:
establishing a call connection by using the video media information or the audio media information until receiving data of at least one avatar media.

8. A method by a terminating user equipment (UE) performing a media call service in a wireless communication network, the method comprising:
receiving, from a originating UE, a first session description protocol (SDP) offer message including information indicating a content type of at least one avatar, and information on whether the originating UE supports a movement of the at least one avatar;
transmitting, to the originating UE, an SDP response message including information on whether the terminating UE supports the movement of the at least one avatar in response to the first SDP offer message;
generating movement information on the at least one avatar, based on the information on whether the terminating UE supports the movement of the at least one avatar included in the SDP response message; and
performing an avatar call service with the originating UE by using the generated movement information.

9. The method of claim 8, further comprising:
receiving, from the originating UE, a second SDP offer message including movement expression information on the at least one avatar; and
transmitting, to the originating UE, a response message including the movement expression information on the at least one avatar in response to the second SDP offer message.

10. The method of claim 8, wherein the first SDP offer message further includes a profile of the content type of the at least one avatar, and
wherein a number of points, a number of feature points, or texture resolution of the at least one avatar are identified by the content type and the profile.

11. The method of claim 9, wherein the movement expression information on the at least one avatar includes at least one of a facial action coding system (FACS) type, a number of feature points, or an expression type of the feature points.

12. The method of claim 8, wherein performing the avatar call service with the originating UE by using the generated movement information comprises:
transmitting, to the originating UE, the generated movement information;
receiving, from the originating UE, avatar movement information on the originating terminal;
rendering an avatar of the originating UE by using the avatar movement information on the originating UE; and
performing the avatar call service with the originating UE by using the rendered avatar of the originating UE.

13. The method of claim 9, wherein the movement expression information on the at least one avatar indicates a data channel via which the movement information is transmitted.

14. The method of claim 8, wherein the first SDP offer message further includes video media information or audio media information, and
wherein the method further comprises:
establishing a call connection by using the video media information or the audio media information until receiving data of at least one avatar media.

15. An originating user equipment (UE) for performing a media call service in a wireless communication network, the originating UE comprising:
a transceiver; and
a processor by controlling the transceiver, configured to:
transmit, to a terminating UE, a first session description protocol (SDP) offer message including information indicating a content type of at least one avatar and information on whether the originating UE supports a movement of the at least one avatar,
receive, from the terminating UE, an SDP response message including information on whether the terminating UE supports the movement of the at least one avatar in response to the first SDP offer message,
generate movement information on the at least one avatar, based on the information on whether the terminating UE supports the movement of the at least one avatar included in the SDP response message, and
perform an avatar call service with the terminating UE by using the generated movement information.
